Europäisches Patentamt

European Patent Office

Office européen des brevets

(11) Veröffentlichungsnummer : **0 043 449**
**B1**

(12) **EUROPÄISCHE PATENTSCHRIFT**

(45) Veröffentlichungstag der Patentschrift :
22.10.86

(51) Int. Cl.⁴ : **G 02 F 1/29, G 02 F 1/31,**
**G 02 B 6/10**

(21) Anmeldenummer : 81104330.6

(22) Anmeldetag : 04.06.81

(54) **Planarer elektrooptischer Lichtablenker für mehrere Strahlpositionen.**

(30) Priorität : 02.07.80 DE 3025083

(43) Veröffentlichungstag der Anmeldung :
13.01.82 Patentblatt 82/02

(45) Bekanntmachung des Hinweises auf die Patenterteilung : 22.10.86 Patentblatt 86/43

(84) Benannte Vertragsstaaten :
DE FR GB

(56) Entgegenhaltungen :
FR-A- 2 103 124
FR-A- 2 304 935
US-A- 3 736 045
US-A- 3 814 498
SOVIET JOURNAL OF QUANTUM ELECTRONICS,
Band 10, Nr. 2, Februar 1980, NEW YORK (US), A.M.
BELIN et al.: "Integrated-optical switching system",
Seiten 249-250
APPLIED OPTICS, Band 18, Nr. 19, Oktober 1979,
NEW YORK (US), c.H. BULMER et al.: "Performance
criteria and limitations of electrooptic waveguide
array deflectors", Seiten 3282-3295
IEEE JOURNAL OF QUANTUM ELECTRONICS, Band
QE-15, Nr. 7, Juli 1979, NEW YORK (US), K. WAGAT-
SUMA et al.: "Mode-conversion and optical filtering
of obliquely incident waves in corrugated waveguide
filters", Seiten 632-637

(73) Patentinhaber : Siemens Aktiengesellschaft Berlin
und München
Wittelsbacherplatz 2
D-8000 München 2 (DE)

(72) Erfinder : Keil, Rudolf, Dipl.-Ing.
Reschreiterstrasse 12
D-8000 München 45 (DE)
Erfinder : Auracher, Franz, Dr.
Eichenstrasse 26
D-8021 Baierbrunn (DE)

**Beschreibung**

Die vorliegende Erfindung betrifft eine planare elektrooptische Lichtablenkvorrichtung nach dem Oberbegriff des Patentanspruchs 1 bzw. 2.

Eine Vorrichtung der genannten Art geht aus Sovjet Journ. of Quant. Electr. 10 (1980), S. 249-250 hervor. Bei dieser Vorrichtung sind die einzelnen getrennt ansteuerbaren Bragg-Ablenker so auf dem gemeinsamen Schichtwellenleiter angeordnet, daß sie im Strahlengang des im Schichtwellenleiter des sich ausbreitenden Lichtstrahles hintereinander angeordnet sind, wobei jeder einzelne Ablenker den ihm zugeführten Lichtstrahl zum nächsten einzelnen Ablenker hin ablenkt. Jeder einzelne Ablenker erstreckt sich im wesentlichen über die ganze Breite des im Schichtwellenleiter zugeführten Lichtstrahls.

Aus Appl. Opt. 18 (1979) S. 3282-3295 ist eine planare elektrooptische Lichtablenkervorrichtung aus mehreren, auf einem gemeinsamen Schichtwellenleiter integrierten und gemeinsam ansteuerbaren elektrooptischen Lichtablenkern bekannt, von denen jeder Licht eines im Schichtwellenleiter geführten Lichtstrahls ablenkt. Die Prismenablenker sind nebeneinander im Strahlengang angeordnet.

Der Erfindung liegt die Aufgabe zugrunde, eine Lichtablenkvorrichtung anzugeben, bei der mehrere Strahlpositionen unabhängig voneinander ansteuerbar sind, und bei der das Licht auf Wunsch gleichzeitig in mehrere Richtungen abgelenkt werden kann.

Diese Aufgabe wird mit einer Vorrichtung nach dem Oberbegriff des Patentanspruchs 1 dadurch gelöst, daß gemäß dem kenzeichnenden Teil dieses Anspruchs die Bragg-Ablenker über die Breite des im Schichtwellenleiter geführten Lichtstrahls verteilt sind, so daß jeder einzelne Bragg-Ablenker nur in einem schmaleren Teilstrahl dieses zugeführten breiten Lichtstrahls angeordnet ist, und nur diesen schmaleren Teilstrahl ablenkt, wobei die verschiedenen Teilstrahlen um verschiedene Winkel abgelenkt werden.

Sie wird auch mit einer Vorrichtung nach dem Oberbegriff des Patentanspruchs 2 dadurch gelöst, daß gemäß dem kennzeichnenden Teil dieses Anspruchs mehrere einzelne Lichtablenker über die Breite des im Schichtwellenleiter geführten Lichtstrahls verteilt sind, wobei eine feste Gitterstruktur vorgesehen ist, die den einfallenden Lichtstrahl in eine der Zahl der Lichtablenker entsprechenden Zahl von Teilstrahlen mit unterschiedlicher Richtung aufteilt, jeder einzelne Lichtablenker nur in dem entsprechenden schmaleren Teilstrahl angeordnet ist und nur diesen schmaleren Teilstrahl ablenkt, die verschiedenen Teilstrahlen in verschiedene Winkel abgelenkt werden und die Lichtablenker einzelen optische Prismenablenker sind.

Um bei einer gegebenen Intensitätsverteilung des einfallenden Lichtstrahls in jede Strahlposition die gewünschte relative Lichtleistung ablenken zu können, sind nach einer Ausgestaltung des Erfindung gemäß Anspruch 3 die Breiten der einzelnen Bragg-Ablenker im Verhältnis der gewünschten Intensitäten der jeweiligen abgelenkten Teilstrahlen ausgebildet.

Die Intensitäten der jeweiligen abgelenkten Teilstrahlen sind gemäß Anspruch 4 über die an die einzelnen Bragg-Ablenker angelegten Spannungen steuerbar.

Nach einer weiteren Ausbildung der Erfindung weist die planare elektrooptische Lichtablenkvorrichtung gemäß Anspruch 5 eine zusätzliche feste Gitterstruktur zur Aufteilung des einfallenden Lichtstrahls in eine der Zahl der Bragg-Ablenker entsprechende Zahl von Teilstrahlen mit unterschiedlichen Richtungen auf, wobei die Teilstrahlen auf die Bragg-Ablenker treffen.

Bei einer Lichtablenkvorrichtung nach Anspruch 2 sind gemäß Anspruch 6 die Intensitäten der Teilstrahlen durch die Prismenablenker modulierbar bzw. schaltbar.

Die feste Gitterstruktur kann gemäß Anspruch 7 zum Ätzen von gitterförmigen Vertiefungen in die Oberfläche des Substrats hergestellt werden, wobei die zu ätzende Struktur fotolithografisch über eine Maske oder holografisch erzeugt wird.

Die Gitterstruktur kann aber auch gemäß Anspruch 8 durch Erzeugen eines Brechzahlgitters im Wellenleiters, und zwar durch Eindiffusion von Metallen in den Wellenleiter oder durch Ionenimplantation durch eine geeignete Maske hergestellt werden.

Vorzugsweise wird eine planare elektrooptische Lichtablenkvorrichtung gemäß Anspruch 9 für einen optischen Drucker zum gleichzeitigen Drucken mehrerer Punkte verwendet.

Die für die erfindungsgemäßen planaren elektrooptischen Lichtablenkvorrichtungen erforderlichen Elektrodenstrukturen lassen sich alle mittels Planartechnik in einem Arbeitsgang herstellen. Wird der einfallende Lichtstrahl durch eine feste Gitterstruktur in Teilstrahlen aufgeteilt, wobei die Teilstrahlen dann auf Ablenker treffen, so ergibt sich ein Vorteil aus der prinzipiellen Möglichkeit, daß das gesamte einfallende Licht in modulierbare Teilstrahlen zerlegt werden kann.

Ausführungsbeispiele der Erfindung sind in der Zeichnung dargestellt und werden im folgenden näher beschrieben.

Figur 1 zeigt das Prinzipbild einer planaren elektrooptischen Lichtablenkvorrichtung für n Strahlpositionen.

Figur 2 zeigt das Prinzipbild eines planaren elektrooptischen Lichtablenkers für n Strahlpositionen, wobei die Lichtaufteilungen n Teilstrahlen durch eine Gitterstruktur, die Lichtablenkung durch n Lichtablenker erfolgt.

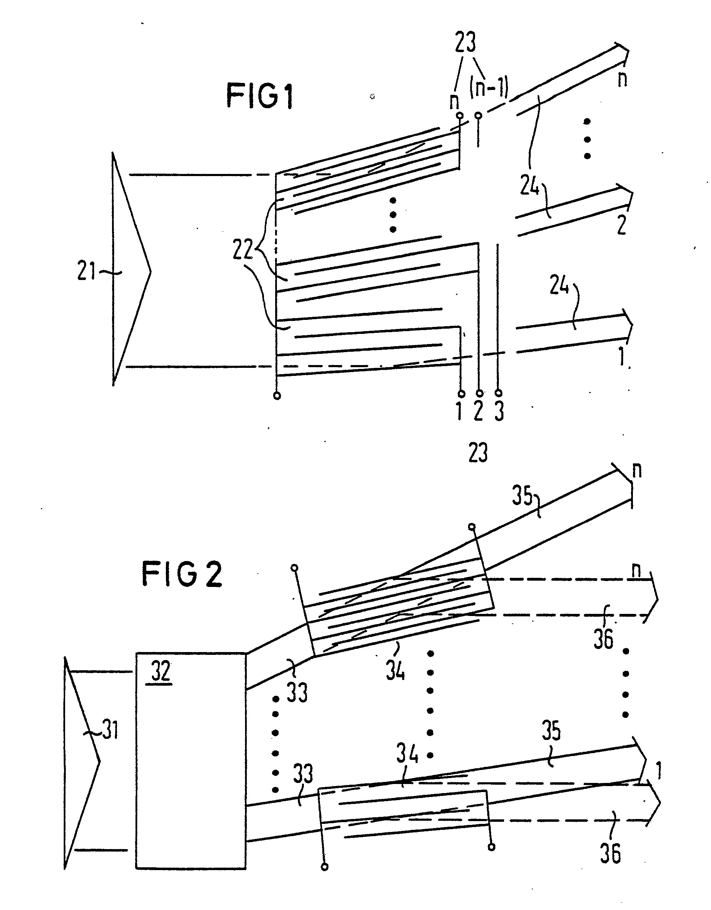

Figur 1 zeigt das Prinzipbild eines planaren elektrooptischen Lichtablenkers für n Strahlpositionen. Der einfallende Lichtstrahl 21 regt den Schichtwellenleiter über eine Breite, die der Gesamtheit aller Elektrodenstrukturen 22 entspricht, an. Die n nebeneinanderliegenden Elektrodenstrukturen weisen unterschiedliche Gitterkonstanten auf und liegen so geneigt auf dem Schichtwellenleiter, daß das Licht unter dem jeweiligen Bragg-Winkel auf die betreffende Elektrodenstruktur 22 auftrifft. Über die Anschlüsse 23 sind die Elektrodenstrukturen 22 getrennt ansteuerbar, so daß das Licht 21 auf Wunsch gleichzeitig als Teilstrahlen 24 in mehrere Richtungen abgelenkt werden kann.

Figur 2 zeigt das Prinzipbild eines planaren elektrooptischen Lichtablenkers für n Strahlpositionen, wobei die Lichtaufteilung in n Teilstrahlen durch eine Gitterstruktur, die Lichtablenkung durch n Lichtablenker erfolgt. Mittels der Gitterstruktur 32 wird der einfallende Lichtstrahl 31 in n Teilstrahlen mit unterschiedlichen Richtungen aufgeteilt, wobei die n Teilstrahlen 33 auf n Lichtablenker 34 auftreffen. Die n Lichtablenker 34 weisen unterschiedliche Gitterkonstanten auf und liegen auf dem Schichtwellenleiter so geneigt, daß die n Teilstrahlen 33 unter dem jeweiligen Bragg-Winkel auf die betreffende Elektrodenstruktur auftreffen. Über die Anschlüsse 37 sind die n Lichtablenker 34 getrennt ansteuerbar. Liegt an den Anschlüssen 37 eines Lichtablenkers 34 keine Spannung an, so breitet sich der betreffende Teilstrahl 33 geradlinig aus. Liegt jedoch an den Anschlüssen 37 eines Lichtablenkers 34 eine Spannung an, so wird je nach der Höhe der angelegten Spannung der betreffende Teilstrahl 33 ganz oder teilweise um den doppelten Bragg-Winkel zum entsprechenden Teilstrahl 36 abgelenkt, wobei die nichtabgelenkte zugehörige Lichtintensität den zugehörigen Teilstrahl 35 bildet.

**Patentansprüche**

1. Planare elektrooptische Lichtablenkvorrichtung aus mehreren, auf einem gemeinsamen Schichtwellenleiter integrierten und getrennt ansteuerbaren elektrooptischen Bragg-Ablenkern (22, 34), von denen jeder Licht eines im Schichtwellenleiter zugeführten Lichtstrahls (21, 31) ablenkt, dadurch gekennzeichnet, daß die Bragg-Ablenker (22, 34) über die Breite des im Schichtwellenleiter geführten Lichtstrahls (21, 31) verteilt sind, so daß jeder einzelne Bragg-Ablenker nur in einem schmaleren Teilstrahl dieses zugeführten breiten Lichtstrahls angeordnet ist und nur diesen schmaleren Teilstrahl ablenkt, wobei die verschiedenen Teilstrahlen um verschiedene Winkel abgelenkt werden.

2. Planare elektrooptische Lichtablenkvorrichtung aus mehreren, auf einem gemeinsamen Schichtwellenleiter integrierten und getrennt ansteuerbaren elektrooptischen Lichtablenkern, von denen jeder Licht eines im Schichtwellenleiter geführten Lichtstrahls (31) ablenkt, dadurch gekennzeichnet, daß mehrere einzelnen Lichtablenker über die Breite des im Schichtwellenleiter geführten Lichtstrahls (31) verteilt sind, wobei eine feste Gitterstruktur (32) vorgesehen ist, die den einfallenden Lichtstrahl (31) in eine der Zahl der Lichtablenker entsprechende Zahl von Teilstrahlen (33) mit unterschiedlicher Richtung aufteilt, jeder einzelne Lichtablenker nur in dem entsprechenden schmaleren Teilstrahl angeordnet ist und nur diesen schmaleren Teilstrahl ablenkt, die verschiedene Teilstrahlen um verschiedene Winkel abgelenkt werden und die Lichtablenker einzelne elektrooptische Prismenablenker sind.

3. Planare elektrooptische Lichtablenkvorrichtung nach Anspruch 1, dadurch gekennzeichnet, daß die Breiten der einzelnen Bragg-Ablenker im Verhältnis der gewünschten Intensitäten der jeweiligen abgelenkten Teilstrahlen ausgebildet sind.

4. Planare elektrooptische Lichtablenkvorrichtung nach Anspruch 1, dadurch gekennzeichnet, daß die Intensitäten der jeweiligen abgelenkten Teilstrahlen über die an die einzelnen Bragg-Ablenkern angelegten Spannungen steuerbar sind.

5. Planare elektrooptische Lichtablenkvorrichtung nach einem der Ansprüche 1, 3 und 4, gekennzeichnet durch eine zusätzliche feste Gitterstruktur zur Aufteilung des einfallenden Lichtstrahls (31) in eine der Zahl der Bragg-Ablenker (34) entsprechende Zahl von Teilstrahlen (33) mit unterschiedlichen Richtungen, wobei die Teilstrahlen (33) auf die Bragg-Ablenker (34) treffen.

6. Planare elektrooptische Lichtablenkvorrichtung nach Anspruch 2, dadurch gekennzeichnet, daß die Intensitäten der Teilstrahlen durch die Prismenablenker modulierbar bzw. schaltbar sind.

7. Verfahren zur Herstellung der planaren elektrooptischen Lichtablenkvorrichtung nach einem der Ansprüche 2, 5 und 6, dadurch gekennzeichnet, daß die feste Gitterstruktur durch Ätzen von gitterförmigen Vertiefungen in die Oberfläche des Substrats hergestellt wird, wobei die zu ätzende Struktur fotolithografisch über eine Maske oder holografisch erzeugt wird.

8. Verfahren zur Herstellung der planaren elektrooptischen Lichtablenkvorrichtung nach einem der Ansprüche 2, 5 und 6, dadurch gekennzeichnet, daß die Gitterstruktur durch Erzeugen eines Brechzahlgitters im Wellenleiter, und zwar durch Eindiffusion von Metallen in den Wellenleiter oder durch Ionenimplantation durch eine geeignete Maske hergestellt wird.

9. Verwendung der planaren elektrooptischen Lichtablenkvorrichtung nach einem der Ansprüche 1 bis 6 für einen optischen Drucker zum gleichzeitigen Druck mehrerer Punkte.

**Claims**

1. A planar, electro-optical light-deflecting device consisting of a plurality of separately-operated, electro-optical Bragg deflectors (22, 34) integrated on a common layer waveguide, each of which deflects light from a light beam (21, 31) supplied *via* the layer waveguide, characterised in that the Bragg deflectors (22, 34) are distributed over the width of the light beam (21, 31) conducted in the layer waveguide so that each individual Bragg deflector is arranged only in a narrower beam-component of the wide light beam that is supplied and deflects only this narrower beam-component, the various components being deflected by different angles.

2. A planar, electro-optical light-deflecting device consisting of a plurality of separately-operated electro-optical light deflectors integrated on a common layer waveguide, each of which deflects light from a light beam (31) conducted *via* the layer waveguide, characterised in that a plurality of individual light deflectors are distributed over the width of the light beam (31) conducted in the layer waveguide, a permanent grid structure (32) is provided which divides the incident light beam (31) into a number of differently-directed beam-components (33) corresponding to the number of light deflectors, each individual light deflector is arranged only in the corresponding, narrower beam-component and deflects only this narrower beam-component, the various beam-components being deflected by different angles and the light deflectors representing individual, electro-optical prismatic deflectors.

3. A planar, electro-optical light-deflecting device as claimed in Claim 1, characterised in that the width of the individual Bragg deflectors are in proportion to the desired intensities of the deflected beam-components.

4. A planar, electro-optical light-deflecting device as claimed in Claim 1, characterised in that the intensities of the deflected beam-components can be controlled *via* the voltages which are connected to the individual Bragg deflectors.

5. A planar, electro-optical light-deflecting device as claimed in one of Claims 1, 3 and 4, characterised by an additional, permanent grid structure which serves to divide the incident light beam (31) into a number of differently-directed beam-components (33) corresponding to the number of Bragg deflectors (34), whereby the beam-components (33) are incident on the Bragg deflectors (34).

6. A planar, electro-optical light-deflecting device as claimed in Claim 2, characterised in that the intensities of the beam-components can be modulated and switched by means of the prismatic deflectors.

7. A method of producing the planar, electro-optical light-deflecting device as claimed in one of Claims 2, 5 and 6, characterised in that the permanent grid structure is produced by etching grid-shaped recesses into the surface of the substrate, where the structure to be etched is produced photo-lithographically using a mask, or holographically.

8. A method of producing the planar, electro-optical light-deflecting device as claimed in one of Claims 2, 5 and 6, characterised in that the grid structure is formed by producing a refractive index grid in the waveguide, by diffusing metals into the waveguide or by implanting ions through a suitable mask.

9. Use of the planar, electro-optical light-deflecting device as claimed in one of Claims 1 to 6 for an optical printer for simultaneously printing a plurality of dots.

**Revendications**

1. Dispositif déflecteur électro-optique plat constitué par plusieurs déflecteurs électro-optiques de Bragg (22, 34), intégrés dans un guide d'ondes commun à couches et pouvant être commandés de façon séparée et dont chacun dévie la lumière d'un faisceau de lumière (21, 31) envoyé dans le guide d'ondes à couches, caractérisé par le fait que les déflecteurs de Bragg (22, 34) sont répartis sur la largeur du faisceau de lumière (21, 31) envoyé dans le guide d'ondes à couches de sorte que chaque déflecteur de Bragg n'est disposé que dans un faisceau partiel plus étroit faisant partie de ce large faisceau de lumière envoyé et ne dévie que ce faisceau partiel plus étroit, les différents faisceaux partiels étant déviés suivant des angles différents.

2. Dispositif déflecteur de lumière électro-optique plat constitué par plusieurs déflecteurs électro-optiques de Bragg, intégrés dans un guide d'ondes commun à couches et pouvant être commandés de façon séparée et dont chacun dévie la lumière d'un faisceau de lumière (31) envoyé dans le guide d'ondes à couches, caractérisé par le fait que plusieurs déflecteurs individuels de lumière sont répartis sur la largeur du faisceau de lumière (31) guidé dans le guide d'ondes à couches et il est prévu une structure fixe en forme de grille (32) qui subdivise le faisceau de lumière incident (31) en un nombre, correspondant au nombre des déflecteurs de lumière, de faisceaux partiels (33) possédant des directions différentes, que chaque déflecteur individuel de lumière est disposé uniquement dans le faisceau partiel plus étroit correspondant et ne dévie que ce faisceau partiel plus étroit, que les différents faisceaux partiels sont déviés selon des angles différents et que les déflecteurs de lumière sont des déflecteurs électro-optiques en forme de prismes individuels.

3. Dispositif déflecteur de lumière électro-optique plat suivant la revendication 1, caractérisé par le fait que les largeurs des différents déflecteurs de Bragg sont agencées en fonction du rapport des intensités souhaitées des faisceaux partiels respectifs déviés.

4. Dispositif déflecteur de lumière électro-optique plat suivant la revendication 1, caractérisé par le fait que les intensités des différents faisceaux partiels déviés peuvent être commandées par l'intermédiaire des tensions appliquées aux différents déflecteurs de Bragg.

5. Dispositif déflecteur de lumière électro-optique plat suivant l'une des revendications 1, 3 et 4, caractérisé par une structure fixe supplémentaire de grille servant à subdiviser le faisceau de lumière incident (31) en un nombre, correspondant au nombre des déflecteurs de Bragg (34), de faisceaux partiels (33) possédant des directions différentes, les faisceaux partiels (33) tombant sur les déflecteurs de Bragg (34).

6. Dispositif déflecteur de lumière électro-optique plat suivant la revendication 2, caractérisé par le fait que les intensités des faisceaux partiels peuvent être modulées ou commutées au moyen des déflecteurs en forme de prismes.

7. Procédé pour fabriquer le dispositif déflecteur de lumière électro-optique plat suivant l'une des revendications 2, 5 et 6, caractérisé par le fait qu'on réalise la structure fixe en forme de grille en aménageant, par corrosion, des sillons en forme de traits dans la face supérieure du substrat, la structure devant être formée par corrosion étant produite par voie photolithographique par l'intermédiaire d'un masque ou par voie holographique.

8. Procédé pour fabriquer le dispositif déflecteur de lumière électro-optique plat suivant l'une des revendications 2, 5 et 6, caractérisé par le fait qu'on fabrique la structure en forme de grille en produisant un échelonnement de l'indice de réfraction dans le guide d'ondes, et ce au moyen d'une diffusion de métaux dans le guide d'ondes ou bien au moyen d'une implantation ionique à l'aide d'un masque approprié.

9. Utilisation du dispositif déflecteur de lumière électro-optique plat suivant l'une des revendications 1 à 6 pour une imprimante optique servant à réaliser l'impression simultanée de plusieurs points.

FIG 1

FIG 2